(19) Europäisches Patentamt
European Patent Office
Office européen des brevets

(11) EP 0 659 930 B1

(12) # FASCICULE DE BREVET EUROPEEN

(45) Date de publication et mention de la délivrance du brevet:
**28.05.1997 Bulletin 1997/22**

(51) Int Cl.⁶: **D06M 15/643**, C08G 77/38, C08G 77/26

(21) Numéro de dépôt: **94420370.2**

(22) Date de dépôt: **22.12.1994**

(54) **Procédé d'adoucissage textile non jaunissant dans lequel, on utilise une composition comprenant un polyorganosiloxane**

Verfahren zur Textilweichmachung mit verminderter Vergilbung das eine Polyorganosiloxan enthaltende Zusammensetzung verwendet

Process for softening textiles with reduced yellowing, in which a composition containing polyorganosiloxane is used

(84) Etats contractants désignés:
**BE DE ES FR GB IT NL**

(30) Priorité: **27.12.1993 FR 9315949**

(43) Date de publication de la demande:
**28.06.1995 Bulletin 1995/26**

(73) Titulaire: **RHONE-POULENC CHIMIE**
**92408 Courbevoie Cédex (FR)**

(72) Inventeurs:
- **Canivenc, Edith**
  **F-69008 Lyon (FR)**
- **Roca-Ortega, José-Luis**
  **F-69003 Lyon (FR)**
- **van der Spuy, André**
  **F-69260 Charbonnieres (FR)**

(74) Mandataire: **Trolliet, Maurice et al**
**RHONE-POULENC CHIMIE,**
**Direction de la Propriété Industrielle,**
**CRIT Carrières,**
**B.P. 62**
**69192 Saint-Fons Cédex (FR)**

(56) Documents cités:
**EP-A- 0 269 886** **EP-A- 0 388 321**
**EP-A- 0 461 071** **EP-A- 0 480 466**
**EP-A- 0 491 659** **EP-A- 0 535 437**
**EP-A- 0 546 231** **GB-A- 1 059 914**
**US-A- 3 268 465** **US-A- 5 223 170**

- **TEXTIL PRAXIS INTERNATIONAL, vol.47, no.5, Mai 1992, LEINFELDEN DE pages 460 - 461, XP271302 DR. H.-J. LAUTENSCHLAGER ET AL. 'Stuktur-Wirkungsbeziehung aminofunktioneller Siliconweichmachungsmittel'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un procédé de conditionnement de matériaux fibreux et, plus précisément, un procédé de conditionnement de matières textiles.

Par l'expression "matériaux fibreux", on entend définir des fibres de matériaux naturels ou synthétiques comme par exemple la laine, le coton, le lin, un polyester, un polyamide, un polyacrylate ou un mélange de ces espèces.

Il est connu de traiter des matériaux fibreux avec des compositions comprenant un polyorganosiloxane à fonction (s) amine(s) dans le but de donner à ces matériaux des propriétés souhaitables, notamment pour leur donner un toucher agréable à la main, c'est-à-dire de la douceur. Comme documents illustrant cet art antérieur, on peut par exemple citer : US-A-4 247 592 où l'on décrit l'utilisation d'un polyorganosiloxane porteur de motif(s) de formule :

$$\equiv Si\text{-}(CH_2)_x\text{-}(NHCH_2CH_2)_{x'}\text{-}NH_2$$

où x est un nombre allant de 3 à 8 et x' = 0 ou 1; EP-A-0 546 231 où l'on décrit l'utilisation d'un polyorganosiloxane porteur de motif(s) de formule :

$$\equiv Si\text{-}(CH_2)_y\text{-}(OCH_2)_{y'}\text{-}CH(OH)CH_2\text{-}N(CH_2CH_2OH)_2$$

où y est un nombre allant de 2 à 8 et y' = 0 ou 1.

Cependant, lors de la mise en oeuvre des compositions comprenant de pareils polyorganosiloxanes à fonction(s) amine(s), dans des techniques classiques de l'industrie textile, notamment la technique d'imprégnation dite de "foulardage", on observe un jaunissement des fibres traitées ; ce jaunissement est consécutif à la thermo-oxydation des groupements aminés du polyorganosiloxane qui est déposé sur les fibres.

Il a maintenant été trouvé, et c'est ce qui constitue l'objet de la présente invention, que l'utilisation dans un procédé d'adoucissage de polyorganosiloxanes porteurs de fonction(s) pipéridinyle(s) stériquement encombrée(s) permet de limiter considérablement et même de supprimer le phénomène de jaunissement de la matière textile traitée, tout en maintenant les performances d'adoucissage attachées à l'emploi des composés silicones aminés de l'art antérieur.

Plus précisément, la présente invention concerne un procédé de conditionnement de matières textiles, permettant l'obtention de matières textiles qui présentent notamment un toucher agréable et un très faible (ou même une absence) de jaunissement, caractérisé en ce que les matières textiles sont mises en contact avec une composition comprenant un polyorganosiloxane ayant par mole au moins un motif de formule générale :

$$(R)_a(X)_bZSi(O)_{\frac{3-(a+b)}{2}} \qquad (I)$$

dans laquelle:

- les symboles R sont identiques ou différents et représentent un radical hydrocarboné monovalent choisi parmi les radicaux alkyles, linéaires ou ramifiés, ayant de 1 à 4 atomes de carbone, phényle et trifluoro-3,3,3 propyle ;
- les symboles X sont identiques ou différents et représentent un radical monovalent choisi parmi un groupement hydroxyle et un radical alkoxy, linéaire ou ramifié, ayant de 1 à 3 atomes de carbone ;
- Z représente un reste à groupe(s) pipéridinyle(s) stériquement encombré(s) choisi parmi :
  - ♦ les restes de formule :

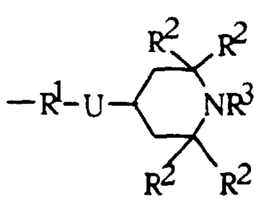

(II)

dans laquelle:

- $R^1$ est un radical hydrocarboné divalent choisi parmi :

  - les radicaux alkylènes, linéaires ou ramifiés, ayant de 2 à 18 atomes de carbone ;
  - les radicaux alkylène-carbonyle dont la partie alkylène, linéaire ou ramifiée, comporte 2 à 20 atomes de carbone ;
  - les radicaux alkylène-cyclohexylène dont la partie alkylène, linéaire ou ramifiée, comporte de 2 à 12 atomes de carbone et la partie cyclohexylène comporte un groupement -OH et éventuellement 1 ou 2 radicaux alkyles ayant de 1 à 4 atomes de carbone ;
  - les radicaux de formule - $R^4$-O-$R^5$- dans laquelle les radicaux $R^4$ et $R^5$ identiques ou différents représentent des radicaux alkylènes ayant 1 à 12 atomes de carbone ;
  - les radicaux de formule -$R^4$-O-$R^5$- dans laquelle les radicaux $R^4$ et $R^5$ ont les significations indiquées précédemment et l'un d'entre-eux ou les deux sont substitués par un ou deux groupement(s) OH ;
  - les radicaux de formules -$R^4$-COO-$R^5$ et -$R^4$-OCO-$R^5$- dans lesquelles $R^4$ et $R^5$ ont les significations précédentes ;
  - les radicaux de formule -$R^6$-O-$R^7$-O-CO-$R^8$- dans laquelle $R^6$, $R^7$ et $R^8$, identiques ou différents, représentent des radicaux alkylènes ayant de 2 à 12 atomes de carbone et le radical $R^7$ est éventuellement substitué par un groupement hydroxyle ;

- U représente -O- ou -$NR^9$-, $R^9$ étant un radical choisi parmi : un atome d'hydrogène ; un radical alkyle, linéaire ou ramifié, ayant de 1 à 6 atomes de carbone ; un radical divalent -$R^1$- ayant la signification indiquée précédemment, l'un des liens valentiels étant relié à l'atome d'azote de -$NR^9$-, l'autre étant relié à un atome de silicium ; et un radical divalent de formule :

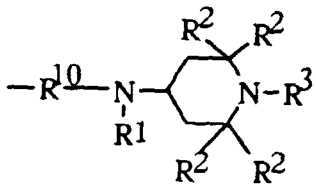

  dans laquelle $R^1$ a la signification indiquée précédemment, $R^2$ et $R^3$ ont les significations indiquées ci-après et $R^{10}$ représente un radical alkylène, linéaire ou ramifié, ayant 1 à 12 atomes de carbone, l'un des liens valentiels (celui de $R^{10}$) étant relié à l'atome d'azote de -$NR^9$-, l'autre (celui de $R^1$) étant relié à un atome de silicium ;
- $R^2$ sont des radicaux, identiques ou différents, choisis parmi les radicaux alkyles, linéaires ou ramifiés, ayant de 1 à 3 atomes de carbone et phényle;
- $R^3$ représente un atome d'hydrogène ou le radical $R^2$;

♦ et ceux de formule :

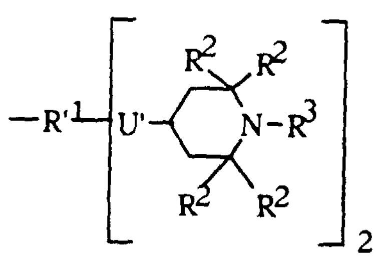

(II')

dans laquelle:

- $R'^1$ est choisi parmi un radical trivalent de formule :

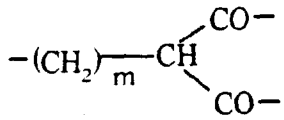

où m représente un nombre de 2 à 20,
et un radical trivalent de formule :

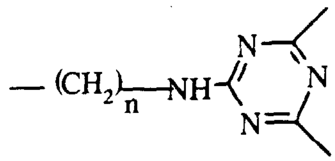

où n représente un nombre de 2 à 20 ;

- U' représente -O- ou $-NR^{11}-$, $R^{11}$ étant un atome d'hydrogène ou un radical alkyle, linéaire ou ramifié ayant de 1 à 6 atomes de carbone ;
- $R^2$ et $R^3$ ont les mêmes significations que celles données à propos de la formule (II) ;

• a est un nombre choisi parmi 0, 1 et 2 ;
• b est un nombre choisi parmi 0, 1 et 2 ;
• la somme a + b est au plus égale à 2.

Le polyorganosiloxane utilisé peut comprendre en outre au moins un autre motif siloxyle de formule :

$$(R)_c(X)_dVSi(O)_{\frac{3-(c+d)}{2}} \quad \text{(III)}$$

dans laquelle:

• les symboles R et X ont les mêmes significations que celles données ci-avant à propos de la formule (I);
• le symbole V représente : un radical alkyle, linéaire ou ramifié, ayant de 5 à 20 atomes de carbone ; un radical de formule $-(CH_2)_p-COO-R^{12}$ dans laquelle p représente un nombre de 5 à 20 et $R^{12}$ représente un radical alkyle linéaire ou ramifié de 1 à 12 atomes de carbone ; un radical de formule $-(CH_2)_q-O-R^{13}$ dans laquelle q représente un nombre de 3 à 10 et $R^{13}$ représente un atome d'hydrogène, un enchainement oxyde d'éthylène, un enchaînement oxyde de propylène, un enchaînement mixte oxyde d'éthylène + oxyde de propylène ou un radical acyle ayant de 2 à 12 atomes de carbone ;
• c est un nombre choisi parmi 0, 1 et 2;
• d est un nombre choisi parmi 0, 1 et 2;
• la somme c + d est au plus égale à 2.

Le polyorganosiloxane mis en oeuvre peut comprendre en outre d'autre(s) motif(s) siloxyle(s) de formule:

$$(R)_e(X)_fSi(O)_{\frac{4-(e+f)}{2}} \quad \text{(IV)}$$

dans laquelle:

• R et X ont les mêmes significations que celles données à propos de la formule (I);
• e est un nombre choisi parmi 0, 1, 2 et 3 ;
• f est un nombre choisi parmi 0, 1,2 et 3 ;
• la somme e + f est au plus égale à 3.

Les motifs siloxyles de formule (I), quand il y en a plus de deux, peuvent être identiques ou différents entre eux ; la même remarque s'applique également aux motifs siloxyles de formules (III) et (IV).

Le polyorganosiloxane mis en oeuvre peut présenter une structure linéaire cyclique ou ramifiée (en présence de motifs de types T et/ou Q) ou un mélange de ces structures. Dans le cas de la présence de motifs monoorganosiloxy de type T et/ou de motifs Q ($SiO_2$), ces motifs sont dans la proportion d'au plus 10 % par rapport au nombre de motifs diorganosiloxy de type D.

Le polyorganosiloxane mis en oeuvre est, par exemple, un polydiorganosiloxane linéaire de formule moyenne:

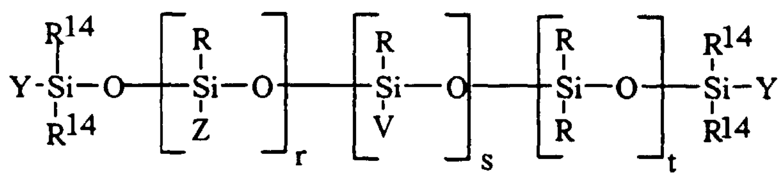

(V)

dans laquelle:

- les symboles R, Z et V ont les significations données ci-avant à propos des formules (I) et (III);
- le symbole Y représente un radical monovalent choisi parmi les radicaux R, Z, V et X ;
- les symboles $R^{14}$ sont identiques ou différents et représentent un radical monovalent choisi parmi un radical R et un radical X tel que défini ci-avant à propos de la formule (I);
- r, s et t sont égaux à zéro ou représentent des nombres entiers ou fractionnaires supérieurs à zéro, avec la condition supplémentaire selon laquelle si r = 0, au moins un des deux radicaux Y représente le radical Z.

De préférence, dans le procédé de l'invention, la composition utilisée comprend un polyorganosiloxane à motif(s) de formules (I) + éventuellement (III) + éventuellement (IV) ou un polyorganosiloxane de formule (V) :

- qui a en moyenne par mole : de 2 à 1600 atomes de silicium, de 1 à 100 restes Z tels que ceux ci-après définis et de 0 à 50 restes V tels que ceux ci-après définis;
- et dans la structure duquel:
  - R est choisi parmi les radicaux méthyle, éthyle, n-propyle et isopropyle;
  - X est choisi parmi les radicaux hydroxyle, méthoxy et éthoxy ;
  - Z est choisi parmi les restes à groupe(s) pipéridinyle(s):
    - ♦ de formule (II) dans laquelle :
      - $R^1$ représente un radical hydrocarboné choisi parmi :
        - les radicaux alkylènes, linéaires ou ramifiés, ayant de 3 à 12 atomes de carbone ;
        - le radical $-(CH_2)_{10}-CO-$;
        - les radicaux alkylène-cyclohexylène dont la partie alkylène, linéaire ou ramifiée, comporte de 2 à 6 atomes de carbone et la partie cyclohexylène comporte un groupement -OH et éventuellement 1 ou 2 substituants alkyles ayant 1 à 4 atomes de carbone ;
        - les radicaux de formule - $R^4$-O-$R^5$- dans laquelle les radicaux $R^4$ et $R^5$ identiques ou différents représentent des radicaux alkylènes ayant 2 à 6 atomes de carbone ;
        - les radicaux de formule -$R^4$-O-$R^5$- dans laquelle les radicaux $R^4$ et $R^5$ ont les significations indiquées précédemment et $R^5$ est substitué par un groupe OH ;-
        - les radicaux de formules -$R^4$-COO-$R^5$- et -$R^4$-OCO-$R^5$- dans lesquelles $R^4$ et $R^5$ ont les significations précédentes ;
        - les radicaux de formule -$R^6$-O-$R^7$-O-CO-$R^8$- dans laquelle $R^6$, $R^7$ et $R^8$, identiques ou différents, représentent des radicaux alkylènes ayant de 2 à 6 atomes de carbone et le radical $R^7$ est substitué par un groupement hydroxyle;
      - U représente -O- ou -$NR^9$- où $R^9$ est un radical alkyle, linéaire ou ramifié, ayant de 1 à 4 atomes de carbone ;
      - $R^2$ représente un radical méthyle;
    - ♦ et ceux de formule (II') dans laquelle:

- $R'^1$ est choisi parmi :
- un radical trivalent de formule :

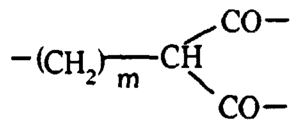

où m représente un nombre de 2 à 10, et
et un radical trivalent de formule :

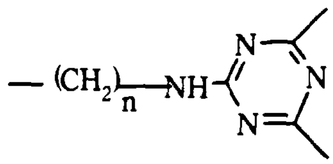

où n représente un nombre de 2 à 10 ;
- U' représente -O- ou - $NR^{11}$- $R^{11}$ étant un radical alkyle, linéaire ou ramifié ayant de 1 à 4 atomes de carbone ;
- $R^2$ représente un radical méthyle

- V est choisi parmi : un radical alkyle, linéaire ou ramifié, ayant 5 à 18 atomes de carbone ; un radical de formule $-(CH_2)_{10}$ - COO - $R^{12}$ dans laquelle $R^{12}$ représente un radical alkyle linéaire de 1 à 6 atomes de carbone ; un radical de formule $-(CH_2)_3$- O - $R^{13}$ où $R^{13}$ représente un atome d'hydrogène, un enchaînement oxyde d'éthylène, un enchaînement oxyde de propylène, un enchaînement mixte oxyde d'éthylène + oxyde de propylène ou un groupement acyle ayant de 2 à 6 atomes de carbone.

Dans le cadre de cette modalité préférentielle, le polydiorganosiloxane linéaire de formule (V) présente les valeurs suivantes pour les symboles r, s et t :

- r est un nombre entier ou fractionaire allant de 0 à 98 avec la condition selon laquelle si r = 0, au moins un des deux radicaux Y représente le radical Z ;
- s est un nombre entier ou fractionnaire allant de 0 à 48 ;
- t est un nombre entier ou fractionnaire allant de 0 à 1598 ;
- la somme r + s + t est un nombre entier ou fractionnaire allant de 0 à 1598.

De manière plus préférentielle, dans le procédé de l'invention, la composition utilisée comprend un polyorganosiloxane à motifs de formule (I) + (IV) + éventuellement (III) ou un polyorganosiloxane de formule (V) :

- qui a en moyenne par mole : de 5 à 800 atomes de silicium, de 1 à 60 restes Z tels que ceux ci-après définis et de 0 à 20 restes V tels que ceux ci-après définis ;
- et dans la structure duquel :

  - R est un radical méthyle ;
  - X est choisi parmi les radicaux hydroxyle et méthyle ;
  - Z est choisi parmi les restes à groupe(s) pipéridinyle(s) :

    - ♦ de formule (II) dans laquelle :

      - $R^1$ représente un radical : triméthylène ; décaméthylène-carbonyle ; hydroxy-2 oxa-4 heptaméthylène ; hydroxy-6 dioxa-4,8 oxo-3 undécaméthylène ;
      - U représente -O- ou -$NR^9$ où $R^9$ est choisi parmi les radicaux méthyle, éthyle, n-propyle et n-butyle ;
      - $R^2$ représente un radical méthyle ;
      - $R^3$ représente un atome d'hydrogène ;

- et ceux de formule (II') dans laquelle :
  - $R'^1$ est choisi parmi les radicaux de formules :

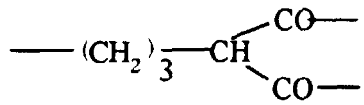

et

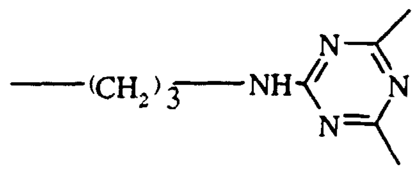
;

  - U' représente -O- ou -N-$R^{11}$- où $R^{11}$ est choisi parmi les radicaux méthyle, éthyle, n-propyle et n-butyle ;
  - $R^2$ représente un radical méthyle ;
  - $R^3$ représente un atome d'hydrogène ;

- V est choisi parmi les radicaux n-octyle et décaméthylène carboxylate de méthyle ou d'éthyle.

Dans le cadre de cette modalité plus préférentielle, le polydiorganosiloxane linéaire de formule (V) présente les valeurs suivantes pour les symboles r, s et t :

- r est un nombre entier ou fractionaire allant de 0 à 58 avec la condition selon laquelle si r = 0, au moins un des deux radicaux Y représente le radical Z ;
- s est un nombre entier ou fractionnaire allant de 0 à 18;
- t est un nombre entier ou fractionnaire allant de 3 à 798 ;
- la somme r + s + t est un nombre entier ou fractionnaire allant de 3 à 798.

Généralement, dans le procédé selon la présente invention, 100 g de polyorganosiloxane tel que ceux précédemment définis comprennent 5 à 200 milliéquivalents (meq) de groupe(s) pipéridinyle(s) encombré(s).

Les polyorganosiloxanes précédemment définis, par exemple ceux de formule (V) où $R^{14}$ est R, peuvent être préparés à partir d'un composé polyorganosiloxane à fonction(s) ≡SiH de formule :

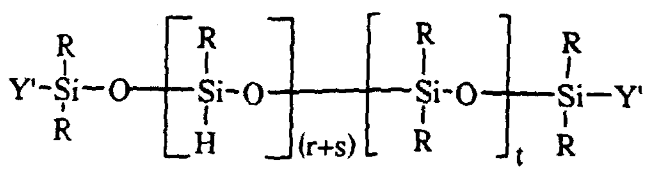
(VI)

dans laquelle:

- les symboles R, r, s et t ont les significations générales ou préférentielles données ci-avant pour la formule (V);
- le symbole Y' représente R, un radical alkoxy, linéaire ou ramifié, ayant de 1 à 3 atomes de carbone ou un atome d'hydrogène.

Le remplacement des atomes d'hydrogène du composé (VI) par le reste Z de formule (II) ou (II') et éventuellement par le reste V se fait par réaction du composé à fonction(s) ≡SiH de formule (VI) avec un autre composé présentant une insaturation éthylénique susceptible de réagir par réaction d'hydrosilylation en présence d'un catalyseur approprié tel que par exemple un catalyseur au platine ; cet autre composé sera donc le précurseur insaturé du reste Z de formule

(II) ou (II') ou du reste V. Comme précurseur du reste V, on peut citer à titre d'exemples : l'octène-1, l'undécènoate de méthyle, le dodécène-1, l'octadécène-1. Comme précurseur du reste Z de formule (II), on peut citer à titre d'exemple: l'allyloxy-4 tétraméthyl-2,2,6,6 pipéridine. Comme précurseur du reste Z de formule (II'), on peut citer à titre d'exemple l'allylmalonate de bis(tétraméthyl-2,2,6,6 pipéridyl-4). Pour plus de détails sur ce procédé, on pourra se reporter au document FR-A- 2 642 764.

Il est encore possible, pour former le reste Z de formule (II), d'opérer de la manière suivante : dans une première étape, on réalise une réaction d'hydrosilylation entre le composé à fonction(s) ≡SiH de formule (VI) et un précurseur difonctionnel du radical $R^1$, comportant d'une part une double liaison éthylénique qui va réagir avec les fonctions ≡SiH et d'autre part un groupe susceptible de réagir avec un précurseur du radical -U-(pipéridinyle encombré) ; puis dans une seconde étape, on fait une seconde réaction visant à fixer ledit précurseur du radical -U-(pipéridinyle encombré) sur le produit obtenu à l'issue de la première étape.

A titre d'exemple, lorsque U représente $NR^9$, on utilise avantageusement comme précurseur du radical $R^1$, un composé comportant une double liaison éthylénique et un groupe époxy tel que notamment l'allyloxy-3 époxy-1,2 propane. A l'issue de la première étape, on forme alors un produit correspondant au composé de départ de formule (VI) dans laquelle tout ou partie des atomes d'hydrogène a été remplacé par les radicaux

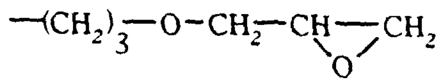 ;

dans la seconde étape, le produit époxydé ainsi obtenu est mis à réagir avec le précurseur de formule $HNR^9$-(pyridinyle encombré).

La réaction d'hydrosilylation entre les fonctions ≡Si-H du composé organosiloxanique (VI) et les composés précurseurs des radicaux Z et V peut se faire simultanément en modulant les rapports molaires des différents réactifs, en fonction des nombres r et s souhaités. Cette réaction connue en elle-même s'effectue en présence d'un catalyseur approprié tel que par exemple un catalyseur au platine.

Les polyorganosiloxanes précédemment définis, par exemple ceux de formule (V) où s = 0, peuvent être préparés par un procédé comportant des étapes d'hydrolyse et de polycondensation, en présence au besoin d'un catalyseur basique, d'un mélange dans les proportions adéquates des réactifs suivants :

- un silane hydrolysable de formule :

$$(R)_g\ (X')_{3-g}SiZ \qquad (VII)$$

  dans laquelle: les smboles R et Z ont les significations générales ou préférentielles données ci-avant pour la formule (I) ; g est un nombre choisi parmi 0, 1 et 2; le symbole X' représente un groupe alkoxy, linéaire ou ramifié, ayant de 1 à 3 atomes de carbone ;
- un polydiorganosiloxane correspondant à la formule (V) où r = 0, s = 0, t = 10 - 500, $R^{14}$ est R et Y est OH, et/ou un polydiorganosiloxane cyclique de formule :

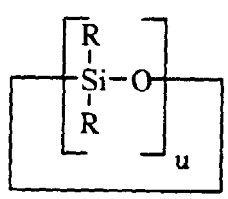 (VIII)

  dans laquelle R a la signification générale ou préférentielle donnée ci-avant pour la formule (I) et u est un nombre entier ou fractionnaire allant de 3 à 10;
- et éventuellement un agent de terminaison de chaînes consistant dans un composé de formule (V) où r = 0, s = 0, t = 0 - 50, $R^{14}$ est R et Y est R ou Z [R et Z ayant les significations générales ou préférentielles données ci-avant pour la formule (I)].

Les polyorganosiloxanes précédemment définis, répondant à la formule (V) où s = 0, peuvent être préparés encore par un autre procédé consistant à réaliser la polycondensation, en présence au besoin d'un catalyseur acide ou basique, d'un mélange dans les proportions adéquates des réactifs suivants :

- un polydiorganosiloxane ou un mélange de polydiorganosiloxanes de formule(s):

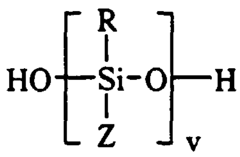

et/ou

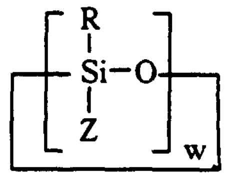

(IX) (X)

où: les symboles R et Z ont les significations générales ou préférentielles données ci-avant pour la formule (I) ; v est un nombre entier ou fractionnaire allant de 10 à 500 ; et w est un nombre entier ou fractionnaire allant de 3 à 10 ;
- un polydiorganosiloxane correspondant à la formule (V) où r = 0, s = 0, t = 10 - 500, $R^{14}$ est R et Y est OH, et/ou un polydiorganosiloxane cyclique de formule (VIII) ;
- et éventuellement un agent de terminaison de chaînes consistant dans un composé de formule (V) où r = 0, s = 0, t = 0 - 50, $R^{14}$ est R et Y est R ou Z, [R et Z ayant les significations générales ou préférentielles données ci-avant pour la formule (I)].

Les voies de synthèses précitées des polyorganosiloxanes de formule (V), basées sur des réactions de polycondensation, sont conduites à une température se situant dans l'intervalle allant de 120°C à 160°C, pendant une durée qui va dépendre de la température choisie et peut varier par exemple entre 3 - 4 heures en opérant à environ 150°C et 5 - 6 heures en opérant à environ 130°C.

En ce qui concerne le catalyseur utilisable, et la mise en oeuvre d'un catalyseur correspond à une modalité préférée, on peut faire appel : à une base consistant dans un hydroxyde, un carbonate ou un bicarbonate de métal alcalin, comme par exemple le sodium ou le potassium ; ou le cas échéant à un acide consistant dans un mono- ou polyacide minéral fort, oxygéné ou non, comme par exemple les acides chlorhydrique, nitrique, sulfurique ou phosphorique. La quantité de catalyseur, quand on en utilise un, exprimée par le pourcentage pondéral de base pure ou d'acide pur par rapport au poids de l'ensemble des réactifs silicones engagés, se situe dans l'intervalle allant de 0,005 à 5 %.

En fin de réaction, quand un catalyseur a été utilisé, le milieu est amené à pH neutre par addition d'une quantité déterminée d'un agent de neutralisation approprié.

Dans le procédé de l'invention, la composition comprenant un polyorganosiloxane à motif(s) de formules (I) + éventuellement (III) + éventuellement (IV) ou un polyorganosiloxane de formule (V), peut être sous forme de solutions, de dispersions ou d'émulsions. Les solutions sont généralement faites à l'aide de solvants organiques. Les dispersions peuvent être réalisées en utilisant des milieux aqueux ou des diluants organiques. Les émulsions sont généralement du type émulsions huile-dans-eau et sont préparées selon les méthodes classiques en utilisant de l'eau et les agents tensio-actifs appropriés.

Le procédé selon la présente invention peut être mis en oeuvre sur toute étoffe tissée ou tricotée et même sur celles réalisées en non-tissé.

Les fibres utilisées pour la réalisation de ces étoffes peuvent être notamment en coton, en polyester, polyamide, viscose, polyacrylate, laine, lin, acétate de cellulose, de même que les fibres élastomériques. Bien entendu on peut utiliser des mélanges de fibres.

Dans le procédé selon la présente invention, pour appliquer la composition comprenant le polysiloxane sur l'étoffe à traiter, on utilise des techniques classiques de l'industrie textile, notamment en faisant appel à la technique d'imprégnation dite de "foulardage" (padding en anglais).

Lorsque l'étoffe est traitée par une composition aqueuse ou une composition comprenant un diluant ou solvant organique, on fait subir ensuite à cette étoffe un traitement thermique pour chasser rapidement l'eau, le diluant ou le solvant sous forme de vapeur.

Généralement la quantité de polysiloxane déposée sur la matière textile traitée correspond à une quantité comprise entre 0,1 et 2 % en poids par rapport au poids de la matière textile sèche traitée.

Les exemples qui vont suivre illustrent la préparation de polyorganosiloxanes à fonction(s) pipéridinyle(s) stériquement encombrée(s) et leur utilisation dans le procédé selon la présente invention.

Exemple 1

Préparation d'un polydiorganosiloxane à fonctions tétraméthylpipéridines.

Dans un réacteur équipé (d'une agitation, d'un thermomètre, d'une ampoule de coulée, d'un réfrigérant, d'un système d'introduction d'azote sec) sont introduits :

- 447,7 g (2,1 moles) de n-butylamino-4 tétraméthyl-2,2,6,6 pipéridine,
- 1000 g de composé polydiorganosiloxane époxydé de formule moyenne :

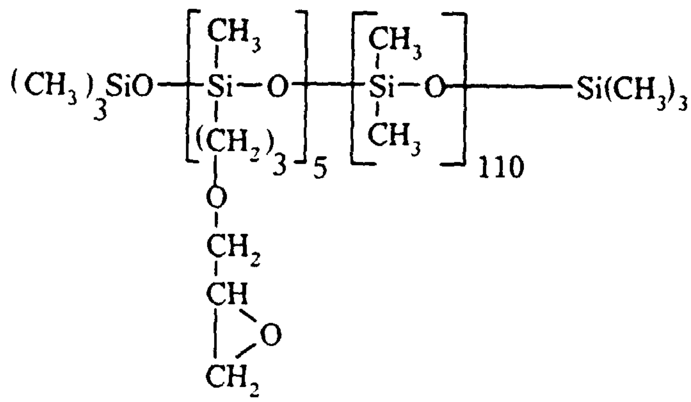

titrant 52,7 meq/100 g en fonctions glycidyles (meq = milliéquivalent), et
- 217 g d'alcool isoamylique.

L'ensemble des réactifs a été préalablement dégazé à l'azote avant introduction dans le réacteur. Le milieu réactionnel est porté à 135 - 140°C. Après heures de réaction, l'alcool isoamylique et l'amine en excès sont éliminés par distillation sous pression réduite (1,33 - 2,66.$10^2$Pa) pendant 7 heures. On obtient ainsi 1104,2 g d'huile silicone et 557,3 g de distillat.

L'indice de basicité (amino tertiaire -N- et reste NH du noyau pipéridinyle) déterminé sur l'huile au moyen d'une solution titrée d'acide perchlorique (0,1 N) est de 98,5 meq/100 g de polymère, pour une théorie de 94,8 meq/100 g.

On effectue une analyse de résonnance magnétique nucléaire (RMN) du proton et du silicium. L'interprétation des spectres confirme la structure du produit attendu, c'est-à-dire un produit de formule moyenne (produit P1) :

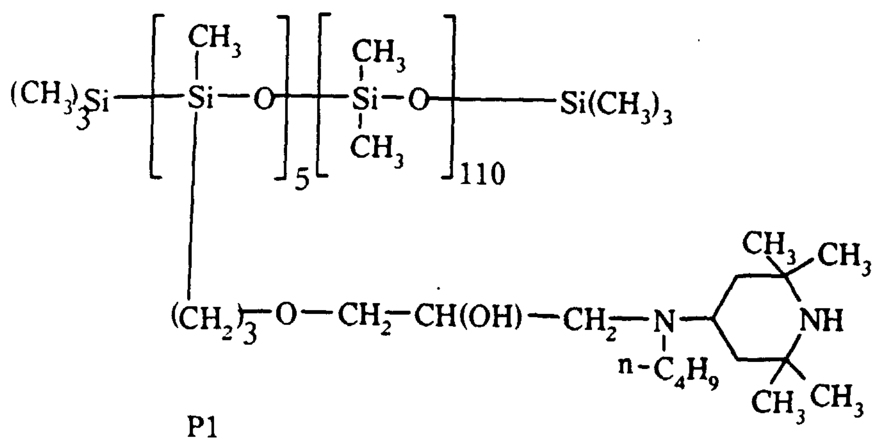

P1

Exemple 2

On réalise les mêmes opérations qu'à l'exemple 1, en utilisant :

- 4 g (0,0188 mole) de n-butylamino-4 tétraméthyl-2,2,6,6 pipéridine,
- 50 g de composé polydiorganosiloxane époxydé répondant à la formule donnée dans l'exemple 1, mais compre-

nant 670 motifs $(CH_3)_2$ $SiO_{2/2}$ au lieu de 110 et titrant 9,4 meq/100 g en fonctions glycidyles, et
- 8,1 g d'alcool isoamylique.

Après 7 heures de réaction à 140°C et élimination des espèces volatiles, on obtient 46 g d'huile silicone et 9,9 g de distillat.

Par titration de l'huile silicone au moyen d'une solution d'acide perchlorique (0,02 N), on détermine un indice de basicité de 18,7 meq/100 g (pour une théorie de 18,8 meq/100 g).

On effectue une analyse de résonnance magnétique nucléaire (RMN) du proton et du silicium. L'interprétation des spectres confirme la structure du produit attendu, c'est-à-dire un produit de formule moyenne (produit P2) :

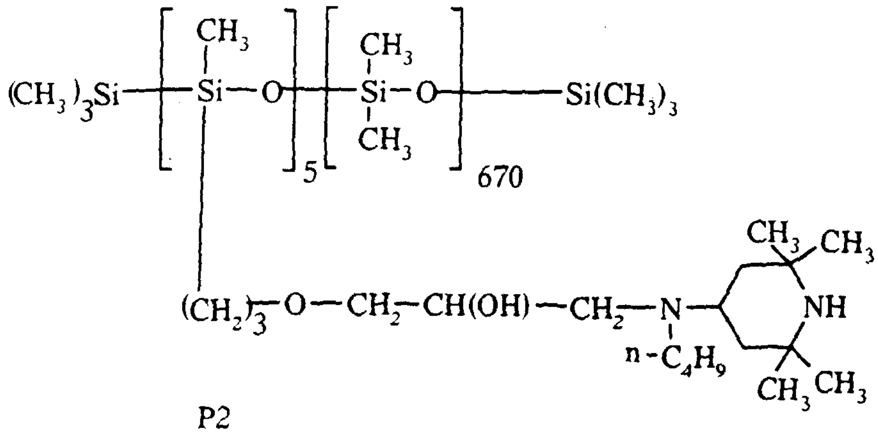

P2

Exemple 3

Description d'un test d'application des produits silicones P1 et P2 selon les exemples 1 et 2.

Un carré de tissu (15 x 15 cm) sergé, polyester/coton 67/33 en poids, de densité 200 g/m$^2$, azuré, est plongé dans une solution de white-spirit renfermant 2,3 % en poids du produit silicone à tester. Après égouttage, le tissu est séché à 40°C pendant 15 minutes dans une étuve ventilée, puis chauffé à 160°C pendant 30 minutes. Le taux de produit silicone déposé sur tissu est de l'ordre de 1 % en poids.

La mesure pour l'évaluation du jaunissement de la pièce de tissu traité est réalisé au moyen d'un spectrophotomètre ACS Sensor II mis dans le commerce par la Société DATA Color avec emploi du dispositif luminant D65 reproduisant la lumière naturelle, et la méthode de calcul est celle bien connue dans l'industrie textile pour la mesure de l'indice de blanc WI 313.

Le résultat de la mesure est exprimé de la manière suivante :

$$\Delta \text{ WI} = \text{WI tissu témoin - WI tissu traité}$$

où WI tissu témoin :

indice de blanc du tissu traité par la solution de white-spirit en absence de produit silicone, puis séché et chauffé (indice moyen sur 3 mesures effectuées sur des endroits différents du tissu)

WI tissu traité :

indice de blanc du tissu traité par la solution de produit silicone dans le white-spirit, puis séché et chauffé (indice moyen sur 3 mesures effectuées sur des endroits différents du tissu)

Les degrés de jaunissement exprimés par l'indice de blanc relatif ΔWI des différents tissus traités par :

- les produits silicones P1 et P2 issus des exemples 1 et 2;
- dans l'exemple comparatif A : un composé silicone de formule moyenne (composé C1) :

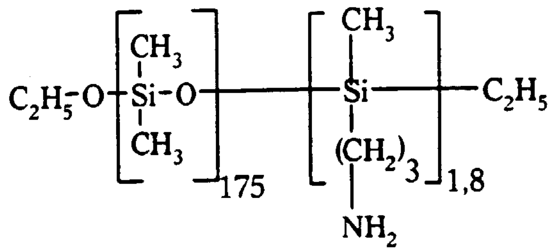

- dans l'exemple comparatif B : un composé silicone de formule moyenne (composé C2) :

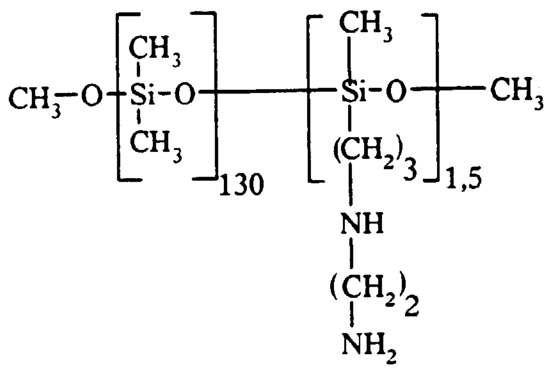

- dans l'exemple comparatif C:un composé silicone de formule moyenne (composé C3) :

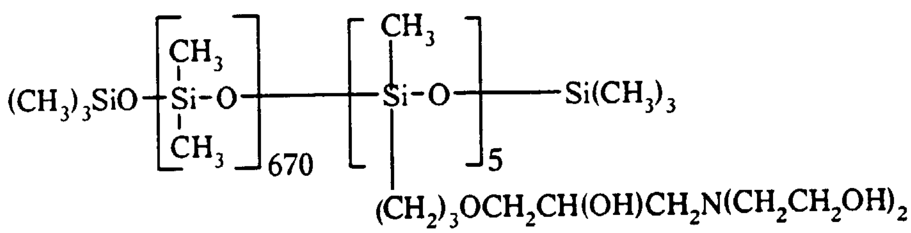

qui a été préparé selon les indications données dans EP-A-0 546 231;

sont reportés dans le tableau suivant. Dans ce tableau figure également les résultats des tests de toucher des tissus traités ; ces tests sont exécutés à la main par 6 personnes et le résultat est exprimé soit en toucher agréable doux (AD) soit en toucher non agréable, sans douceur (NAD).

| Ex | Produit silicone et Fonctionnalisation | Indice de basicité en meq/100 g de produit | ΔWI | Toucher |
|---|---|---|---|---|
| 1 | P1<br>$(CH_2)_3OCH_2CH(OH)CH_2N(Bu)$- 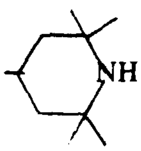 | 98,5 | 0,48 | AD |
| 2 | P2<br>$(CH_2)_3OCH_2CH(OH)CH_2N(Bu)$- 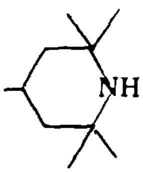 | 18,7 | - 0,32 | AD |
| A | C1<br>$(CH_2)_3NH_2$ | 14,3 ($NH_2$) | 9,23 | AD |
| B | C2<br>$(CH_2)_3NH(CH_2)_2NH_2$ | 31,2 (NH + $NH_2$) | 28,50 | AD |
| C | C3<br>$(CH_2)_3OCH_2CH(OH)CH_2N(CH_2CH_2OH)_2$ | 9,0 (N tertiaire) | 3,32 | AD |

Exemple 4

Préparation d'un autre polydiorganosiloxane à fonctions tétraméthylpipéridines.

Dans un réacteur équipé (d'une agitation, d'un thermomètre, d'un réfrigérant, d'un système d'introduction d'azote sec) sont introduits :

- 949 g (3,21 moles) d'octaméthylcyclotétrasiloxane,
- 44,8 g de composé polydiorganosiloxane de formule moyenne :

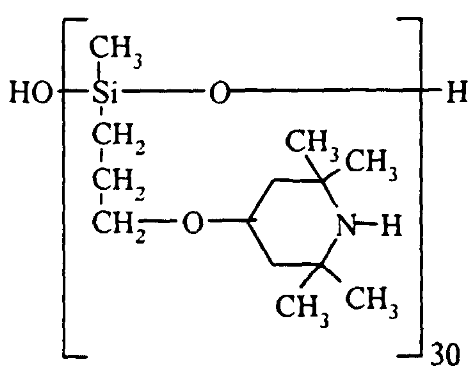

- 4,3 g de composé polydiméthylsiloxane de formule moyenne :

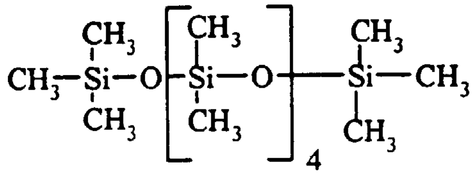

L'ensemble des réactifs a été préalablement dégazé à l'azote. Le milieu réactionnel est porté à 145 - 155°C. 0,104 g (0,0018 moles) de KOH en solution aqueuse (20 % en poids) sont ajoutés. Après 3 heures de réaction le catalyseur est neutralisé avec 0,138 g (0,0012 moles) d'acide phosphorique (à 85 % en poids d'acide pur) en maintenant la même température pendant 1 heure. Le mélange réactionnel est dévolatilisé sous pression réduite ($6{,}65\text{-}10^2$Pa) pendant 3 heures. On obtient ainsi 886 g d'huile silicone et 105 g de distillat.

L'indice de basicité de l'huile silicone est de 18,8 meq/100 g de polymère (pour une théorie de 18,0 meq/100 g).

On effectue une analyse de résonnance magnétique nucléaire (RMN) du proton et du silicium. L'interprétation des spectres confirme la structure du produit attendu, c'est-à-dire un produit de formule moyenne (produit P3) :

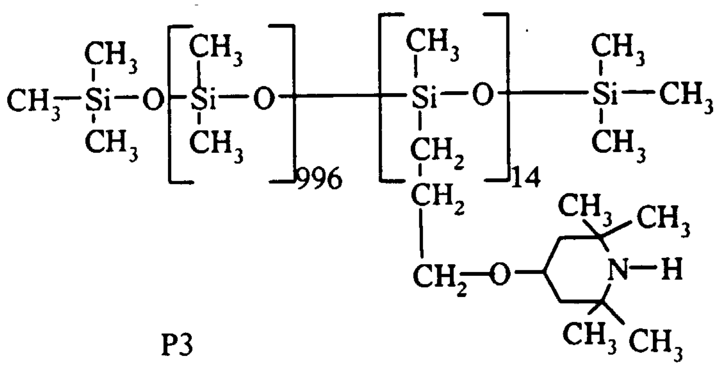

P3

Exemple 5

Description des tests d'applications du produit silicone P3 selon l'exemple 4.

Les tests d'applications sont réalisés sur des pièces de tissu qui ont été préparées et traitées comme indiqué ci-avant dans l'exemple 3 :

- par la solution de white-spirit renfermant le produit silicone P3 ;
- par la solution de white-spirit ne renfermant pas de produit silicone (exemple comparatif D) ; et
- par la solution de white-spirit renfermant un composé silicone C2 selon l'art antérieur et décrit ci-avant dans l'exemple 3 (exemple comparatif E).

Les pièces de tissu traité sont séchées puis chauffées comme indiqué ci-avant dans l'exemple 3.

Les degrés de jaunissement, exprimés par l'indice de blanc relatif ΔWI, sont évalués comme indiqué ci-avant dans l'exemple 3.

On réalise également des tests de toucher comme indiqué ci-avant dans l'exemple 3.

Les résultats obtenus sont rassemblés dans le tableau suivant :

| Ex | Produit silicone et Fonctionnalisation | Indice de basicité en meq/100 g de produit | ΔWI | Toucher |
|---|---|---|---|---|
| 5 | P3 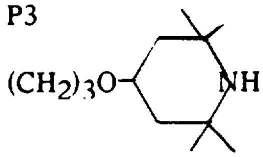 | 18,8 | - 0,18 | AD |
| D | Pas de produit silicone | -- | 0 | NAD |
| E | C2 $(CH_2)_3NH(CH_2)_2NH_2$ | 30,0 $(NH + NH_2)$ | 26,80 | AD |

**Revendications**

1. Procédé de conditionnement de matières textiles, permettant l'obtention de matières textiles qui présentent notamment un toucher agréable et un très faible (ou même une absence) de jaunissement, caractérisé en ce que les matières textiles sont mises en contact avec une composition comprenant un polyorganosiloxane ayant par mole au moins un motif de formule générale :

$$(R)_a(X)_bZSi(O)_{\frac{3-(a+b)}{2}} \qquad (I)$$

dans laquelle :

- les symboles R sont identiques ou différents et représentent un radical hydrocarboné monovalent choisi parmi les radicaux alkyles, linéaires ou ramifiés, ayant de 1 à 4 atomes de carbone, phényle et trifluoro-3,3,3 propyle ;
- les symboles X sont identiques ou différents et représentent un radical monovalent choisi parmi un groupement hydroxyle et un radical alkoxy, linéaire ou ramifié, ayant de 1 à 3 atomes de carbone ;
- Z représente un reste à groupe(s) pipéridinyle(s) stériquement encombré(s) choisi parmi :

  ♦ les restes de formule :

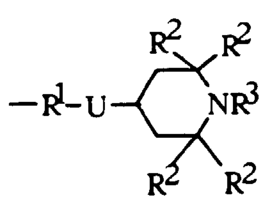 (II)

dans laquelle :

- $R^1$ est un radical hydrocarboné divalent choisi parmi :

  - les radicaux alkylènes, linéaires ou ramifiés, ayant de 2 à 18 atomes de carbone ;
  - les radicaux alkylène-carbonyle dont la partie alkylène, linéaire ou ramifiée, comporte 2 à 20

atomes de carbone ;

- les radicaux alkylène-cyclohexylène dont la partie alkylène, linéaire ou ramifiée, comporte de 2 à 12 atomes de carbone et la partie cyclohexylène comporte un groupement -OH et éventuellement 1 ou 2 radicaux alkyles ayant de 1 à 4 atomes de carbone ;
- les radicaux de formule - $R^4$-O-$R^5$- dans laquelle les radicaux $R^4$ et $R^5$ identiques ou différents représentent des radicaux alkylènes ayant 1 à 12 atomes de carbone ;
- les radicaux de formule -$R^4$-O-$R^5$- dans laquelle les radicaux $R^4$ et $R^5$ ont les significations indiquées précédemment et l'un d'entre-eux ou les deux sont substitués par un ou deux groupement (s) OH ;
- les radicaux de formules -$R^4$-COO-$R^5$ et -$R^4$-OCO-$R^5$- dans lesquelles $R^4$ et $R^5$ ont les significations précédentes ;
- les radicaux de formule -$R^6$-O-$R^7$-O-CO-$R^8$- dans laquelle $R^6$, $R^7$ et $R^8$, identiques ou différents, représentent des radicaux alkylènes ayant de 2 à 12 atomes de carbone et le radical $R^7$ est éventuellement substitué par un groupement hydroxyle ;

- U représente -O- ou -$NR^9$-, $R^9$ étant un radical choisi parmi : un atome d'hydrogène ; un radical alkyle, linéaire ou ramifié, ayant de 1 à 6 atomes de carbone ; un radical divalent -$R^1$- ayant la signification indiquée précédemment, l'un des liens valentiels étant relié à l'atome d'azote de -$NR^9$-, l'autre étant relié à un atome de silicium ; et un radical divalent de formule :

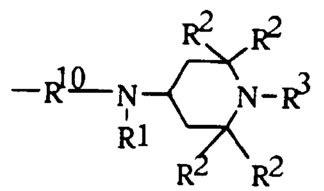

dans laquelle $R^1$ a la signification indiquée précédemment, $R^2$ et $R^3$ ont les significations indiquées ci-après et $R^{10}$ représente un radical alkylène, linéaire ou ramifié, ayant 1 à 12 atomes de carbone, l'un des liens valentiels (celui de $R^{10}$) étant relié à l'atome d'azote de -$NR^9$-, l'autre (celui de $R^1$) étant relié à un atome de silicium ;

- $R^2$ sont des radicaux, identiques ou différents, choisis parmi les radicaux alkyles, linéaires ou ramifiés, ayant de 1 à 3 atomes de carbone et phényle ;
- $R^3$ représente un atome d'hydrogène ou le radical $R^2$ ;

♦ et ceux de formule :

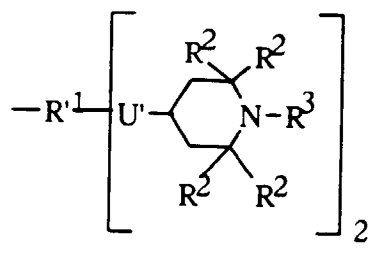

(II')

dans laquelle :

- $R'^1$ est choisi parmi un radical trivalent de formule :

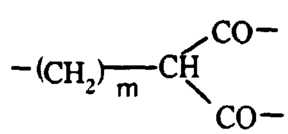

où m représente un nombre de 2 à 20,
et un radical trivalent de formule :

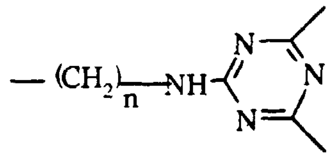

où n représente un nombre de 2 à 20 ;

- U' représente -O- ou $-NR^{11}-$, $R^{11}$ étant un atome d'hydrogène ou un radical alkyle, linéaire ou ramifié ayant de 1 à 6 atomes de carbone ;
- $R^2$ et $R^3$ ont les mêmes significations que celles données à propos de la formule (II) ;

- a est un nombre choisi parmi 0, 1 et 2 ;
- b est un nombre choisi parmi 0, 1 et 2 ;
- la somme a + b est au plus égale à 2.

**2.** Procédé selon la revendication 1, caractérisé en ce que le polyorganosiloxane utilisé peut comprendre en outre au moins un autre motif siloxyle de formule :

$$(R)_c(X)_dVSi(O)_{\frac{3-(c+d)}{2}} \qquad \text{(III)}$$

dans laquelle :

- les symboles R et X ont les mêmes significations que celles données ci-avant à propos de la formule (I) ;
- le symbole V représente : un radical alkyle, linéaire ou ramifié, ayant de 5 à 20 atomes de carbone ; un radical de formule $-(CH_2)_p-COO-R^{12}$ dans laquelle p représente un nombre de 5 à 20 et $R^{12}$ représente un radical alkyle linéaire ou ramifié de 1 à 12 atomes de carbone ; un radical de formule $-(CH_2)_q-O-R^{13}$ dans laquelle q représente un nombre de 3 à 10 et $R^{13}$ représente un atome d'hydrogène, un enchainement oxyde d'éthylène, un enchaînement oxyde de propylène, un enchaînement mixte oxyde d'éthylène + oxyde de propylène ou un radical acyle ayant de 2 à 12 atomes de carbone ;
- c est un nombre choisi parmi 0, 1 et 2 ;
- d est un nombre choisi parmi 0, 1 et 2 ;
- la somme c + d est au plus égale à 2.

**3.** Procédé selon la revendication 1 ou 2, caractérisé en ce que le polyorganosiloxane mis en oeuvre peut comprendre en outre d'autre(s) motif(s) siloxyle(s) de formule :

$$(R)_e(X)_fSi(O)_{\frac{4-(e+f)}{2}} \qquad \text{(IV)}$$

dans laquelle :

- R et X ont les mêmes significations que celles données à propos de la formule (I);
- e est un nombre choisi parmi 0, 1, 2 et 3 ;
- f est un nombre choisi parmi 0, 1,2 et 3 ;
- la somme e + f est au plus égale à 3.

**4.** Procédé selon l'une quelconque des revendications 1 à 3, caractérisé en ce que le polyorganosiloxane mis en oeuvre est un polydiorganosiloxane linéaire de formule moyenne :

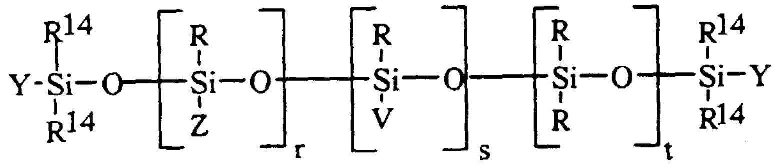 (V)

dans laquelle :

- les symboles R, Z et V ont les significations données ci-avant à propos des formules (I) et (III) ;
- le symbole Y représente un radical monovalent choisi parmi les radicaux R, Z, V et X ;
- les symboles $R^{14}$ sont identiques ou différents et représentent un radical monovalent choisi parmi un radical R et un radical X tel que défini ci-avant à propos de la formule (I) ;
- r, s et t sont égaux à zéro ou représentent des nombres entiers ou fractionnaires supérieurs à zéro, avec la condition supplémentaire selon laquelle si r = 0, au moins un des deux radicaux Y représente le radical Z.

**5.** Procédé selon l'une quelconque des revendications 1 à 4, caractérisé en ce que on utilise un polyorganosiloxane à motif(s) de formules (I) + éventuellement (III) + éventuellement (IV) ou un polyorganosiloxane de formule (V) :

- qui a en moyenne par mole : de 2 à 1600 atomes de silicium, de 1 à 100 restes Z tels que ceux ci-après définis et de 0 à 50 restes V tels que ceux ci-après définis ;
- et dans la structure duquel :
  - R est choisi parmi les radicaux méthyle, éthyle, n-propyle et isopropyle ;
  - X est choisi parmi les radicaux hydroxyle, méthoxy et éthoxy ;
  - Z est choisi parmi les restes à groupe(s) pipéridinyle(s) :
    - ♦ de formule (II) dans laquelle :
      - $R^1$ représente un radical hydrocarboné choisi parmi :
        - les radicaux alkylènes, linéaires ou ramifiés, ayant de 3 à 12 atomes de carbone ;
        - le radical $-(CH_2)_{10}-CO-$ ;
        - les radicaux alkylène-cyclohexylène dont la partie alkylène, linéaire ou ramifiée, comporte de 2 à 6 atomes de carbone et la partie cyclohexylène comporte un groupement -OH et éventuellement 1 ou 2 substituants alkyles ayant 1 à 4 atomes de carbone ;
        - les radicaux de formule $-R^4-O-R^5-$ dans laquelle les radicaux $R^4$ et $R^5$ identiques ou différents représentent des radicaux alkylènes ayant 2 à 6 atomes de carbone ;
        - les radicaux de formule $-R^4-O-R^5-$ dans laquelle les radicaux $R^4$ et $R^5$ ont les significations indiquées précédemment et $R^5$ est substitué par un groupe OH ;-
        - les radicaux de formules $-R^4-COO-R^5-$ et $-R^4-OCO-R^5-$ dans lesquelles $R^4$ et $R^5$ ont les significations précédentes ;
        - les radicaux de formule $-R^6-O-R^7-O-CO-R^8-$ dans laquelle $R^6$, $R^7$ et $R^8$, identiques ou différents, représentent des radicaux alkylènes ayant de 2 à 6 atomes de carbone et le radical $R^7$ est substitué par un groupement hydroxyle ;
      - U représente -O- ou $-NR^9-$ où $R^9$ est un radical alkyle, linéaire ou ramifié, ayant de 1 à 4 atomes de carbone ;
      - $R^2$ représente un radical méthyle;
    - ♦ et ceux de formule (II') dans laquelle :
      - $R'^1$ est choisi parmi :
        - un radical trivalent de formule:

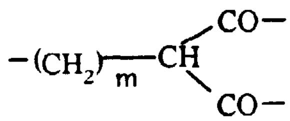

où m représente un nombre de 2 à 10, et
et un radical trivalent de formule :

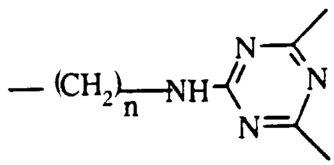

où n représente un nombre de 2 à 10 ;

- U' représente -O- ou -$NR^{11}$-, $R^{11}$ étant un radical alkyle, linéaire ou ramifié ayant de 1 à 4 atomes de carbone ;
- $R^2$ représente un radical méthyle

• V est choisi parmi : un radical alkyle, linéaire ou ramifié, ayant 5 à 18 atomes de carbone ; un radical de formule $-(CH_2)_{10}$ - COO - $R^{12}$ dans laquelle $R^{12}$ représente un radical alkyle linéaire de 1 à 6 atomes de carbone ; un radical de formule $-(CH_2)_3$- O - $R^{13}$ où $R^{13}$ représente un atome d'hydrogène, un enchaînement oxyde d'éthylène, un enchaînement oxyde de propylène, un enchaînement mixte oxyde d'éthylène + oxyde de propylène ou un groupement acyle ayant de 2 à 6 atomes de carbone.

**6.** Procédé selon la revendication 5, caractérisé en ce que le polydiorganosiloxane linéaire de formule (V) présente les valeurs suivantes pour les symboles r, s et t :

- r est un nombre entier ou fractionaire allant de 0 à 98 avec la condition selon laquelle si r = 0, au moins un des deux radicaux Y représente le radical Z ;
- s est un nombre entier ou fractionnaire allant de 0 à 48 ;
- t est un nombre entier ou fractionnaire allant de 0 à 1598 ;
- la somme r + s + t est un nombre entier ou fractionnaire allant de 0 à 1598.

**7.** Procédé selon l'une quelconque des revendications 1 à 6, caractérisé en ce que la composition comprend un polyorganosiloxane possédant 5 à 200 milliéquivalents (meq) de groupe(s) pipéridinyle(s) encombré(s).

**8.** Procédé selon l'une quelconque des revendications 1 à 7, caractérisé en ce que la composition utilisée peut être sous forme de solutions, de dispersions ou d'émulsions.

**9.** Procédé selon l'une quelconque des revendications 1 à 8, caractérisé en ce qu'il est mis en oeuvre sur une matière textile à base de coton, polyester, polyamide, viscose, polyacrylate, laine, acétate de cellulose, ou un mélange de ces espèces.

**10.** Procédé selon l'une quelconque des revendications 1 à 9, caractérisé en ce que la quantité de polysiloxane déposée sur la matière textile traitée correspond à une quantité comprise entre 0,1 et 2 % en poids par rapport au poids de la matière textile sèche traitée.

**11.** Procédé de préparation des polyorganosiloxanes linéaires de formule (V) où s= 0, qui peuvent être mis en oeuvre dans le procédé de conditionnement de matières textiles selon l'une quelconque des revendications 4 à 10, caractérisé en ce que l'on fait réagir, en présence au besoin d'un catalyseur basique, un mélange dans les proportions adéquates des réactifs suivants :

- un silane hydrolysable de formule :

$$(R)_g\,(X')_{3-g}SiZ \qquad (VII)$$

dans laquelle : les smboles R et Z ont les significations données ci-avant pour la formule (I) ; g est un nombre choisi parmi 0, 1 et 2 ; le symbole X' représente un groupe alkoxy, linéaire ou ramifié, ayant de 1 à 3 atomes de carbone ;

- un polydiorganosiloxane correspondant à la formule (V) où r = 0, s = 0, t = 10 - 500, $R^{14}$ est R et Y est OH, et/ou un polydiorganosiloxane cyclique de formule :

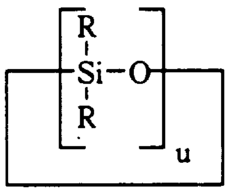

(VIII)

dans laquelle R a la signification donnée ci-avant pour la formule (I) et u est un nombre entier ou fractionnaire allant de 3 à 10 ;

- et éventuellement un agent de terminaison de chaînes consistant dans un composé de formule (V) où r=0, s=0, t=0-50, $R^{14}$ est R et Y est R ou Z.

**12.** Procédé de préparation des polyorganosiloxanes linéaires de formule (V) où s= 0, qui peuvent être mis en oeuvre dans le procédé de conditionnement de matières textiles selon l'une quelconque des revendications 4 à 10, caractérisé en ce que l'on fait réagir, en présence au besoin d'un catalyseur basique ou acide, un mélange dans les proportions adéquates des réactifs suivants :

- un polydiorganosiloxane ou un mélange de polydiorganosiloxanes de formule(s) :

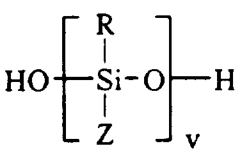

et/ou

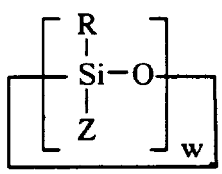

(IX) (X)

où : les symboles R et Z ont les significations données ci-avant pour la formule (I); v est un nombre entier ou fractionnaire allant de 10 à 500 ; et w est un nombre entier ou fractionnaire allant de 3 à 10 ;

- un polydiorganosiloxane correspondant à la formule (V) où r = 0, s = 0, t = 10 - 500, $R^{14}$ est R et Y est OH, et/ou un polydiorganosiloxane cyclique de formule (VIII) ;
- et éventuellement un agent de terminaison de chaînes consistant dans un composé de formule (V) où r=0, s=0, t=0-50, $R^{14}$ est R et Y est R ou Z.

## Patentansprüche

**1.** Verfahren zur Konditionierung von Textilmaterialien, das es ermöglicht, Textilien mit insbesondere einem angenehmen Griff und einem sehr geringen (oder sogar keinem) Vergilben zu erhalten, dadurch gekennzeichnet, daß die Textilmaterialien in Kontakt mit einer Zusammensetzung gebracht werden, die ein Polyorganosiloxan umfaßt, das pro Molekül mindestens eine Struktureinheit der allgemeinen Formel (I)

$$(R)_a(X)_bZSi(O)_{\frac{3-(a+b)}{2}} \qquad (I)$$

besitzt, in der

- die Symbole R gleich oder verschieden sind und einen monovalenten Kohlenwasserstoffrest darstellen, ausgewählt unter den Resten Alkyl, linear oder verzweigt mit 1 bis 4 Kohlenstoffatomen, Phenyl und 3,3,3-Trifluorpropyl;
- die Symbole X gleich oder verschieden sind und einen monovalenten Rest darstellen, ausgewählt unter einer Hydroxylgruppe und einem linearen oder verzweigten Alkoxyrest mit 1 bis 3 Kohlenstoffatomen;
- Z einen Rest mit einer oder mehreren sterisch sperrigen Piperidinyl-Gruppen darstellt, ausgewählt unter:

  - den Resten der Formel (II)

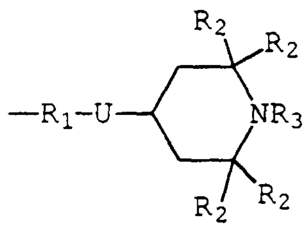

(II)

in der

- $R_1$ ein divalenter Kohlenwasserstoffrest ist, ausgewählt unter:

  * den linearen oder verzweigten Resten Alkylen mit 2 bis 18 Kohlenstoffatomen;
  * den Resten Alkylen-Carbonyl, deren linearer oder verzweigter Alkylenteil 2 bis 20 Kohlenstoffatome umfaßt;
  * den Resten Alkylen-Cyclohexylen, deren linearer oder verzweigter Alkylenteil 2 bis 12 Kohlenstoffatome umfaßt und deren Cyclohexylenteil eine Gruppe -OH und gegebenenfalls 1 oder 2 Reste Alkyl mit 1 bis 4 Kohlenstoffatomen umfaßt;
  * den Resten der Formel $-R_4-O-R_5-$, worin die Reste $R_4$ und $R_5$, gleich oder verschieden, Reste Alkylen mit 1 bis 12 Kohlenstoffatomen darstellen;
  * den Resten der Formel $-R_4-O-R_5-$, worin die Reste $R_4$ und $R_5$ die gleichen Bedeutungen wie zuvor besitzen und wobei einer von ihnen oder alle beide durch eine oder zwei Gruppen OH substituiert sind;
  * den Resten der Formeln $-R_4-COO-R_5-$ und $-R_4-OCO-R_5-$, worin $R_4$ und $R_5$ die obigen Bedeutungen besitzen;
  * den Resten der Formel $-R_6-O-R_7-O-COR_8$, worin $R_6$, $R_7$ und $R_8$, gleich oder verschieden, Reste Alkylen mit 2 bis 12 Kohlenstoffatomen darstellen und der Rest $R_7$ gegebenenfalls durch eine Hydroxylgruppe substituiert ist;

- U -O- oder $-NR_9$ darstellt, $R_9$ ein Rest ist, ausgewählt unter: einem Wasserstoffatom; einem linearen oder verzweigten Rest Alkyl mit 1 bis 6 Kohlenstoffatomen; einem divalenten Rest $-R_1-$ mit der oben angegebenen Bedeutung, wobei eine der Valenzen mit dem Stickstoffatom von $-NR_9$ und die andere mit einem Siliciumatom verbunden ist; und einem divalenten Rest der Formel

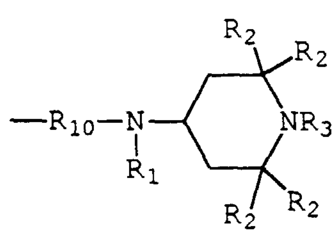

worin $R_1$ die oben angegebene Bedeutung besitzt, $R_2$ und $R_3$ die unten angegebenen Bedeutungen besitzen und $R_{10}$ ein linearer oder verzweigter Rest Alkylen mit 1 bis 12 Kohlenstoffatomen ist, wobei eine der Valenzen (der von $R_{10}$) mit dem Stickstoffatom von $-NR_9$ und die andere (die von $R_{10}$) mit einem Siliciumatom verbunden ist;
- $R_2$ gleiche oder verschiedene Reste darstellen, ausgewählt unter den linearen oder verzweigten Resten Alkyl mit 1 bis 3 Kohlenstoffatomen und Phenyl;

- $R_3$ ein Wasserstoffatom oder den Rest $R_2$ bedeutet;

♦ und den Resten der Formel (II')

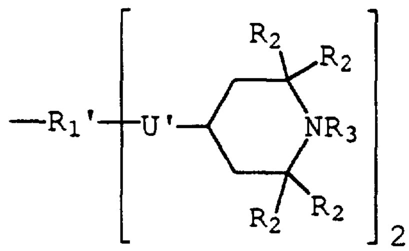

(II')

in der $R_1$' ausgewählt wird unter einem trivalenten Rest der Formel

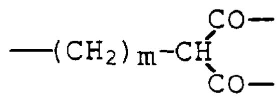

worin m eine Zahl von 2 bis 20 darstellt, und einem trivalenten Rest der Formel

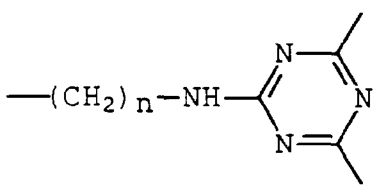

worin n eine Zahl von 2 bis 20 darstellt;

- U' -O- oder $-NR_{11}$ darstellt, $R_{11}$ ein Wasserstoffatom ist oder einen linearen oder verzweigten Rest Alkyl mit 1 bis 6 Kohlenstoffatomen bedeutet;
- $R_2$ und $R_3$ die gleichen Bedeutungen besitzen wie bei der Formel (II) angegeben;

• a eine unter 0, 1 und 2 ausgewählte Zahl ist;
• b eine unter 0, 1 und 2 ausgewählte Zahl ist;
• die Summe a + b höchstens gleich 2 ist.

**2.** Verfahren nach Anspruch 1, dadurch gekennzeichnet, daß das verwendete Polyorganosiloxan außerdem mindestens eine Struktureinheit Siloxyl der Formel (III)

$$(R)_c(X)_dVSi(O)_{\frac{3-(c+d)}{2}} \qquad (III)$$

umfassen kann, in der

• die Symbole R und X die gleichen Bedeutungen besitzen wie oben bei der Formel (I) angegeben;
• das Symbol V darstellt: einen linearen oder verzweigten Rest Alkyl mit 5 bis 20 Kohlenstoffatomen; einen Rest der Formel $-(CH_2)_p-COO-R_{12}$, worin p eine Zahl von 5 bis 20 ist und $R_{12}$ einen linearen oder verzweigten Rest Alkyl mit 1 bis 12 Kohlenstoffatomen bedeutet; einen Rest der Formel $-(CH_2)_q-$ $O-R_{13}$, worin q eine Zahl von 3 bis 10 ist und $R_{13}$ ein Wasserstoffatom, eine Ethylenoxid-Kette, eine Propylenoxid-Kette, eine gemischte

Kette Ethylenoxid-Propylenoxid oder einen Rest Acyl mit 2 bis 12 Kohlenstoffatomen bedeutet;

- c eine unter 0, 1 und 2 ausgewählte Zahl ist;
- d eine unter 0, 1 und 2 ausgewählte Zahl ist;
- die Summe c + d höchstens gleich 2 ist.

**3.** Verfahren nach Anspruch 1 oder 2, dadurch gekennzeichnet, daß das verwendete Polyorganosiloxan außerdem andere Struktureinheit(en) Siloxyl der Formel (IV)

$$(R)_e(X)_fSi(O)_{\frac{4-(e+f)}{2}} \qquad (IV)$$

umfassen kann, in der

- R und X die gleichen Bedeutungen besitzen wie oben bei der Formel (I) angegeben;
- e eine unter 0, 1, 2 und 3 ausgewählte Zahl ist;
- f eine unter 0, 1, 2 und 3 ausgewählte Zahl ist;
- die Summe e + f höchstens gleich 3 ist.

**4.** Verfahren nach irgendeinem der Ansprüche 1 bis 3, dadurch gekennzeichnet, daß das verwendete Polyorganosiloxan ein lineares Polydiorganosiloxan der mittleren Formel (V)

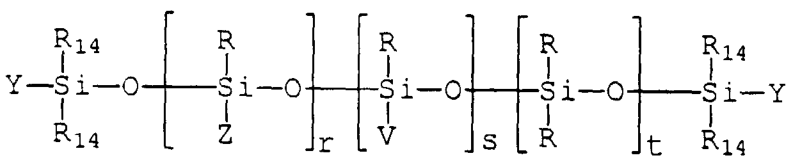

(V)

ist, in der

- die Symbole R, Z und V die oben bei den Formeln (I) und (III) angegebenen Bedeutungen besitzen;
- das Symbol Y einen monovalenten Rest darstellt, ausgewählt unter den Resten R, Z, V und X;
- die Symbole $R_{14}$ gleich oder verschieden sind und einen monovalenten Rest bedeuten, ausgewählt unter einem wie oben bei der Formel (I) definierten Rest R und einem Rest X;
- r, s und t gleich null sind oder ganze oder gebrochene Zahlen von größer als null darstellen, mit der zusätzlichen Bedingung, daß in dem Fall, wo r = 0 ist, mindestens einer der zwei Reste Y den Rest Z bedeutet.

**5.** Verfahren nach irgendeinem der Ansprüche 1 bis 4, dadurch gekennzeichnet, daß man ein Polyorganosiloxan mit Struktureinheit(en) der Formeln (I) + gegebenenfalls (III) + gegebenenfalls (IV) oder ein Polyorganosiloxan der Formel (V) verwendet:

- das im Mittel pro Mol aufweist: 2 bis 1600 Atome Silicium, 1 bis 100 Reste Z wie nachstehend definiert und 0 bis 50 Reste V wie nachstehend definiert;
- und in der Struktur, bei der
  - R unter den Resten Methyl, Ethyl, n-Propyl und Isopropyl ausgewählt wird;
  - X unter den Resten Hydroxyl, Methoxy und Ethoxy ausgewählt wird;
  - Z unter den Resten mit Piperidinyl-Gruppe(n) ausgewählt wird;
    - ♦ der Formel (II), in der
      - $R_1$ einen Kohlenwasserstoffrest darstellt, ausgewählt unter:
        - * den linearen oder verzweigten Resten Alkylen mit 3 bis 12 Kohlenstoffatomen;
        - * dem Rest $-(CH_2)_{10}-CO-$;
        - * den Resten Alkylen-Cyclohexylen, deren linearer oder verzweigter Alkylenteil 2 bis 6 Kohlenstoffatome umfaßt und deren Cyclohexylenteil eine Gruppe -OH und gegebenenfalls 1

oder 2 Substituenten Alkyl mit 1 bis 4 Kohlenstoffatomen umfaßt;

* den Resten der Formel $-R_4-O-R_5-$, worin die Reste $R_4$ und $R_5$, gleich oder verschieden, Reste Alkylen mit 2 bis 6 Kohlenstoffatomen darstellen;
* den Resten der Formel $-R,-O-R_5-$, worin die Reste $R_4$ und $R_5$ die gleichen Bedeutungen wie zuvor besitzen und $R_5$ durch eine Gruppe OH substituiert sind;
* den Resten der Formeln $-R_4-COO-R_5-$ und $-R_4-OCO-R_5-$, worin $R_4$ und $R_5$ die obigen Bedeutungen besitzen;
* den Resten der Formel $-R_6-O-R_7-O-COR_8$, worin $R_6$, $R_7$ und $R_8$, gleich oder verschieden, Reste Alkylen mit 2 bis 6 Kohlenstoffatomen darstellen und der Rest $R_7$ durch eine Hydroxylgruppe substituiert ist;

- U -O- oder $-NR_9$ darstellt, worin $R_9$ ein linearer oder verzweigter Rest Alkyl mit 1 bis 4 Kohlenstoffatomen ist;
- $R_2$ ein Rest Methyl ist;

♦ und der Struktur der Formel (II'), in der

- $R_1'$ ausgewählt wird unter:

* einem trivalenten Rest der Formel

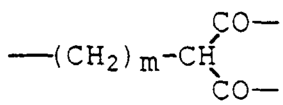

worin m eine Zahl von 2 bis 10 darstellt,
und einem trivalenten Rest der Formel

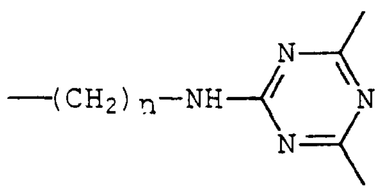

worin n eine Zahl von 2 bis 10
darstellt;

- U' -O- oder $-NR_{11}$ darstellt und $R_{11}$ einen linearen oder verzweigten Rest Alkyl mit 1 bis 4 Kohlenstoffatomen bedeutet;

* $R_2$ ein Rest Methyl ist;

• V ausgewählt wird unter: einem linearen oder verzweigten Rest Alkyl mit 5 bis 18 Kohlenstoffatomen; einen Rest der Formel $-(CH_2)_{10}-COO-R_{12}$, worin $R_{12}$ einen linearen Rest Alkyl mit 1 bis 6 Kohlenstoffatomen bedeutet; einen Rest der Formel $-(CH_2)_3-O-R_{13}$, worin $R_{13}$ ein Wasserstoffatom, eine Ethylenoxid-Kette, eine Propylenoxid-Kette, eine gemischte Kette Ethylenoxid-Propylenoxid oder eine Gruppe Acyl mit 2 bis 6 Kohlenstoffatomen bedeutet.

**6.** Verfahren nach Anspruch 5, dadurch gekennzeichnet, daß das lineare Polydiorganosiloxan der Formel (V) die folgenden Werte für die Symbole r, s und t aufweist:

- r ist eine ganze oder gebrochene Zahl von 0 bis 98 mit der Bedingung, daß in dem Fall, wo r = 0 ist, mindestens einer der zwei Reste Y den Rest Z bedeutet;
- s ist eine ganze oder gebrochene Zahl von 0 bis 48;

- t ist eine ganze oder gebrochene Zahl von 0 bis 1598;
- die Summe r + s + t ist eine ganze oder gebrochene Zahl von 0 bis 1598.

**7.** Verfahren nach irgendeinem der Ansprüche 1 bis 6, dadurch gekennzeichnet, daß die Zusammensetzung ein Polyorganosiloxan umfaßt, das 5 bis 200 Milliäquivalent (meq) sperrige Piperidinyl-Gruppe(n) besitzt.

**8.** Verfahren nach irgendeinem der Ansprüche 1 bis 7, dadurch gekennzeichnet, daß die verwendete Zusammensetzung in Form von Lösungen, Dispersionen oder Emulsionen vorliegen kann.

**9.** Verfahren nach irgendeinem der Ansprüche 1 bis 8, dadurch gekennzeichnet, daß man ein Textilmaterial auf der Basis von Baumwolle, Polyester, Polyamid, Viskose, Polyacrylat, Wolle, Celluloseacetat oder eine Mischung dieser Sorten einsetzt.

**10.** Verfahren nach irgendeinem der Ansprüche 1 bis 9, dadurch gekennzeichnet, daß die Menge des auf das behandelte Textilmaterial aufgebrachten Polysiloxans einer Menge zwischen 0,1 Gew.-% und 2 Gew.-%, bezogen auf das behandelte trockene Textilmaterial, entspricht.

**11.** Verfahren zur Herstellung von linearen Polyorganosiloxanen der Formel (V), worin s = 0 ist, die in dem Verfahren zur Konditionierung von Textilmaterialien gemäß einem der Ansprüche 4 bis 10 eingesetzt werden können, dadurch gekennzeichnet, daß man falls erforderlich in Anwesenheit eines basischen Katalysators eine Mischung der folgenden Reaktionspartner in adäquaten Anteilen zur Reaktion bringt:

- ein hydrolysierbares Silan der Formel

$$(R)_g(X')_{3-g}SiZ \qquad (VII)$$

in der die Symbole R und Z die oben bei der Formel (I) angegebenen Bedeutungen besitzen; g eine unter 0, 1 und 2 ausgewählte Zahl ist; das Symbol X' eine lineare oder verzweigte Gruppe Alkoxy mit 1 bis 3 Kohlenstoffatomen darstellt;
- ein Polydiorganosiloxan, das der Formel (V) entspricht, worin r = 0, s = 0, t = 10-500, $R_{14}$ gleich R und Y gleich OH sind,
und/oder
ein cyclisches Polydiorganosiloxan der Formel (VIII)

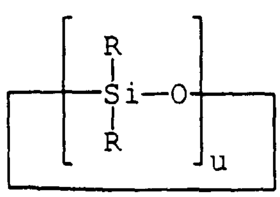

(VIII)

in der R die oben bei der Formel (I) angegebene Bedeutung besitzt und u eine ganze oder gebrochene Zahl von 3 bis 10 ist:
- und gegebenenfalls ein Mittel zum Kettenabbruch, das aus einer Verbindung der Formel (V) besteht, worin r = 0, s = 0, t = 0-50, $R_{14}$, gleich R und Y gleich R oder Z sind.

**12.** Verfahren zur Herstellung von linearen Polyorganosiloxanen der Formel (V), worin s = 0 ist, die in dem Verfahren zur Konditionierung von Textilmaterialien gemäß einem der Ansprüche 4 bis 10 eingesetzt werden können, dadurch gekennzeichnet, daß man falls erforderlich in Anwesenheit eines basischen Katalysators eine Mischung der folgenden Reaktionspartner in adäquaten Anteilen zur Reaktion bringt:

- ein Polydiorganosiloxan oder eine Mischung von Polydiorganosiloxanen der Formel(n) (IX) und/oder (X)

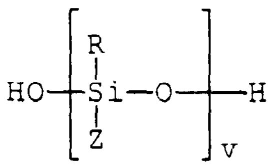 und/oder 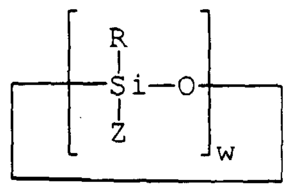

(IX) (X)

worin die Symbole R und Z die oben bei der Formel (I) angegebenen Bedeutungen besitzen; v eine ganze oder gebrochene Zahl von 10 bis 500 und w eine ganze oder gebrochene Zahl von 3 bis 10 bedeuten;

- ein Polydiorganosiloxan, das der Formel (V) entspricht, worin r = 0, s = 0, t = 10-500, $R_{14}$ gleich R und Y gleich OH sind, und/oder ein cyclisches Polydiorganosiloxan der Formel (VIII);
- und gegebenenfalls ein Mittel zum Kettenabbruch, das aus einer Verbindung der Formel (V) besteht, worin r = 0, s = 0, t = 0-50, $R_{14}$ gleich R und Y gleich R oder Z sind.

## Claims

1. Process for conditioning textile materials which makes it possible to obtain textile materials which especially have a pleasant handle and a very low (or even absence of) yellowing, characterized in that the textile materials are brought into contact with a composition comprising a polyorganosiloxane having, per mole, at least one unit of general formula:

$$(R)_a(X)_bZSi(O)_{\frac{3-(a+b)}{2}} \quad (I)$$

in which:

- the symbols R are identical or different and represent a monovalent hydrocarbon radical chosen from linear or branched alkyl radicals having from 1 to 4 carbon atoms, the phenyl radical and the 3,3,3-trifluoropropyl radical;
- the symbols X are identical or different and represent a monovalent radical chosen from a hydroxyl group and a linear or branched alkoxy radical having from 1 to 3 carbon atoms;
- Z represents a residue containing (a) sterically hindered piperidyl group(s) chosen from :

  - ♦ the residues of formula:

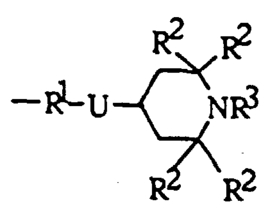

(II)

in which:

- R1 is a divalent hydrocarbon radical chosen from:

  - linear or branched alkylene radicals having from 2 to 18 carbon atoms;
  - alkylenecarbonyl radicals in which the linear or branched alkylene part contains 2 to 20 carbon atoms;
  - alkylenecyclohexylene radicals in which the linear or branched alkylene part contains from 2 to 12 carbon atoms and the cyclohexylene part contains an -OH group and optionally 1 or 2 alkyl radicals having from 1 to 4 carbon atoms;

- radicals of formula $-R^4-O-R^5-$ in which the radicals $R^4$ and $R^5$, which are identical or different, represent alkylene radicals having 1 to 12 carbon atoms;
- radicals of the formula $-R^4-O-R^5-$ in which the radicals $R^4$ and $R^5$ have the meanings indicated above and one of them or both are substituted by one or two -OH group(s);
- radicals of formulae $-R^4-COO-R^5$ and $-R^4-OCO-R^5-$ in which $R^4$ and $R^5$ have the meanings above;
- radicals of formula $-R^6-O-R^7-O-CO-R^8-$ in which $R^6$, $R^7$ and $R^8$, which are identical or different, represent alkylene radicals having from 2 to 12 carbon atoms and the radical $R^7$ is optionally substituted by a hydroxyl group;

- U represents -O- or $-NR^9-$, $R^9$ being a radical chosen from a hydrogen atom, a linear or branched alkyl radical having from 1 to 6 carbon atoms, a divalent radical $-R^1-$ having the meaning indicated above, one of the valency bonds being connected to the nitrogen atom of $-NR^9-$ and the other being connected to a silicon atom, and a divalent radical of formula:

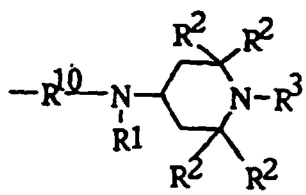

  in which $R^1$ has the meaning indicated above, $R^2$ and $R^3$ have the meanings indicated hereinbelow and $R^{10}$ represents a linear or branched alkylene radical having from 1 to 12 carbon atoms, one of the valency bonds (that of $R^{10}$) being connected to the nitrogen atom of $-NR^9-$ and the other (that of $R^1$) being connected to a silicon atom;
- $R^2$ are radicals, which are identical or different, chosen from linear or branched alkyl radicals having from 1 to 3 carbon atoms and the phenyl radical;
- $R^3$ represents a hydrogen atom or the radical $R^2$;

♦ and those of formula:

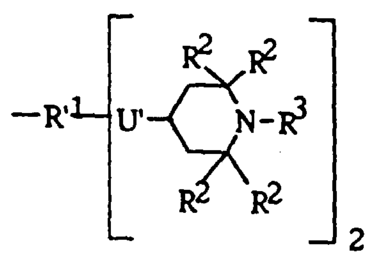

(II')

in which

- R'1 is chosen from a trivalent radical of formula:

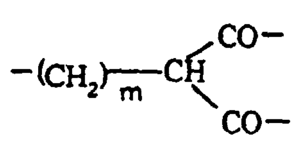

  where m represents a number from 2 to 20,
  and a trivalent radical of formula:

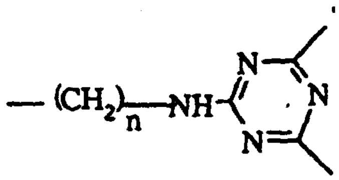

where n represents a number from 2 to 20;

- U' represents -O- or $-N^{11}-$ $R^{11}$ being a hydrogen atom or a linear or branched alkyl radical having from 1 to 6 carbon atoms;
- $R^2$ and $R^3$ have the same meanings as those given with respect to the formula (II);

• a is a number chosen from 0, 1 and 2;
• b is a number chosen from 0, 1 and 2;
• the sum a + b is not greater than 2.

**2.** Process according to Claim 1, characterized in that the polyorganosiloxane used can additionally comprise at least one other siloxyl unit of formula:

$$(R)_c(X)_dVSi(O)_{\frac{3-(c+d)}{2}} \quad \text{(III)}$$

in which:

• the symbols R and X have the same meanings as those given hereinabove with respect to the formula (I);
• the symbol V represents: a linear or branched alkyl radical having from 5 to 20 carbon atoms; a radical of formula $-(CH_2)_p-COO-R^{12}$ in which p represents a number from 5 to 20 and $R^{12}$ represents a linear or branched alkyl radical containing 1 to 12 carbon atoms; a radical of formula $-(CH_2)_q-O-R^{13}$ in which q represents a number from 3 to 10 and $R^{13}$ represents a hydrogen atom, an ethylene oxide chain, a propylene oxide chain, a mixed ethylene oxide + propylene oxide chain or an acyl radical having from 2 to 12 carbon atoms;
• c is a number chosen from 0, 1 and 2;
• d is a number chosen from 0, 1 and 2;
• the sum c + d is not greater than 2.

**3.** Process according to Claim 1 or 2, characterized in that the polyorganosiloxane used can additionally comprise (an)other siloxyl unit(s) of formula:

$$(R)_e(X)_fSi(O)_{\frac{4-(e+f)}{2}} \quad \text{(IV)}$$

in which:

• R and X have the same meanings as those given with respect to the formula (I);
• e is a number chosen from 0, 1, 2 and 3;
• f is a number chosen from 0, 1, 2 and 3;
• the sum e + f is not greater than 3.

**4.** Process according to any one of Claims 1 to 3, characterized in that the polyorganosiloxane used is a linear polydiorganosiloxane of average formula:

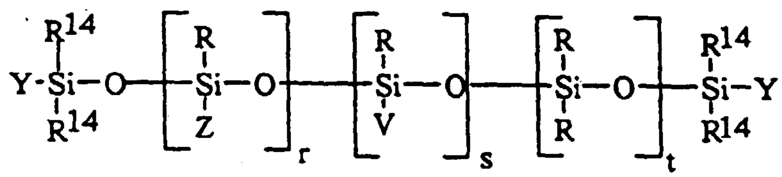

(V)

in which:

- the symbols R, Z and V have the meanings given hereinabove with respect to the formulae (I) and (III);
- the symbol Y represents a monovalent radical chosen from the radicals R, Z, V and X;
- the symbols $R^{14}$ are identical or different and represent a monovalent radical chosen from a radical R and a radical X such as defined hereinabove with respect to the formula (I);
- r, s and t are equal to zero or represent integers or fractional numbers greater than zero, with the additional condition according to which, if r = 0, at least one of the two radicals Y represents the radical Z.

**5.** Process according to any one of Claims 1 to 4, characterized in that use is made of a polyorganosiloxane containing (a) unit(s) of formulae (I) + optionally (III) + optionally (IV) or a polyorganosiloxane of formula (V) :

- which has per mole, on average: from 2 to 1600 silicon atoms, from 1 to 100 residues Z, such as those defined hereinbelow, and from 0 to 50 residues V, such as those defined hereinbelow;
- and in the structure of which:
  - R is chosen from methyl, ethyl, n-propyl and isopropyl radicals;
  - X is chosen from hydroxyl, methoxy and ethoxy radicals;
  - Z is chosen from residues containing (a) piperidyl group(s) :
    - ♦ of formula (II) in which:
      - $R^1$ represents a hydrocarbon radical chosen from:
        - linear or branched alkylene radicals having from 3 to 12 carbon atoms;
        - the radical $-(CH_2)_{10}-CO-$;
        - alkylenecyclohexylene radicals in which the linear or branched alkylene part contains from 2 to 6 carbon atoms and the cyclohexylene part contains an -OH group and optionally 1 or 2 alkyl substituents having 1 to 4 carbon atoms;
        - radicals of formula $-R^4-O-R^5-$ in which the radicals $R^4$ and $R^5$, which are identical or different, represent alkylene radicals having 2 to 6 carbon atoms;
        - radicals of formula $-R^4-O-R^5-$ in which the radicals $R^4$ and $R^5$ have the meanings indicated above and $R^5$ is substituted by an OH group;
        - radicals of formula $-R^4-CO-R^5-$ and $-R^4-OCO-R^5-$ in which $R^4$ and $R^5$ have the meanings above;
        - radicals of formula $-R^6-O-R^7-O-CO-R^8-$ in which $R^6$, $R^7$ and $R^8$, which are identical or different, represent alkylene radicals having from 2 to 6 carbon atoms and the radical $R^7$ is substituted by a hydroxyl group;
      - U represents -O- or $-NR^9-$ where $R^9$ is a linear or branched alkyl radical having from 1 to 4 carbon atoms;
      - $R^2$ represents a methyl radical;
    - ♦ and those of formula (II') in which:
      - $R'^1$ is chosen from:
        - a trivalent radical of formula:

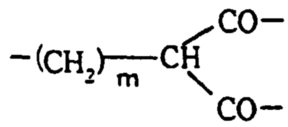

where m represents a number from 2 to 10, and a trivalent radical of formula:

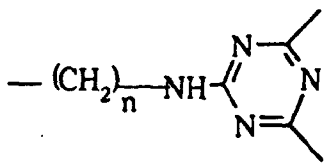

where n represents a number from 2 to 10;

- U' represents -O- or $-NR^{11}-$, $R^{11}$ being a linear or branched alkyl radical having from 1 to 4 carbon atoms;
- $R^2$ represents a methyl radical;

• V is chosen from: a linear or branched alkyl radical having 5 to 18 carbon atoms; a radical of formula $-(CH_2)_{10}-COO-R^{12}$ in which $R^{12}$ represents a linear alkyl radical containing 1 to 6 carbon atoms; a radical of formula $-(CH_2)_3-O-R^{13}$ where $R^{13}$ represents a hydrogen atom, an ethylene oxide chain, a propylene oxide chain, a mixed ethylene oxide + propylene oxide chain or an acyl group having from 2 to 6 carbon atoms.

**6.** Process according to Claim 5, characterized in that the linear polydiorganosiloxane of formula (V) has the following values for the symbols r, s and t:

- r is an integer or fractional number ranging from 0 to 98 with the condition according to which, if r = 0, at least one of the two radicals Y represents the radical Z;
- s is an integer or fractional number ranging from 0 to 48;
- t is an integer or fractional number ranging from 0 to 1598;
- the sum r + s + t is an integer or fractional number ranging from 0 to 1598.

**7.** Process according to any one of Claims 1 to 6, characterized in that the composition comprises a polyorganosiloxane possessing 5 to 200 milliequivalents (meq) of (a) hindered piperidyl group(s).

**8.** Process according to any one of Claims 1 to 7, characterized in that the composition used can be in the form of solutions, dispersions or emulsions.

**9.** Process according to any one of Claims 1 to 8, characterized in that it is used on a textile material based on cotton, polyester, polyamide, viscose, polyacrylate, wool, cellulose acetate or a mixture of these types.

**10.** Process according to any one of Claims 1 to 9, characterized in that the amount of polysiloxane deposited on the treated textile material corresponds to an amount of between 0.1 and 2 % by weight with respect to the weight of the dry treated textile material.

**11.** Process for the preparation of the linear polyorganosiloxanes of formula (V) where s = 0, which can be used in the process for conditioning textile materials according to any one of Claims 4 to 10, characterized in that a mixture in suitable proportions of the following reactants is reacted, if necessary in the presence of a basic catalyst:

- a hydrolysable silane of formula:

$$(R)_g(X')_{3-g}SiZ \qquad (VII)$$

in which the symbols R and Z have the meanings given hereinabove for the formula (I), g is a number chosen from 0, 1 and 2 and the symbol X' represents a linear or branched alkoxy group having from 1 to 3 carbon atoms;

- a polydiorganosiloxane corresponding to the formula (V) where r = 0, s = 0, t = 10 - 500, $R^{14}$ is R and Y is OH, and/or
  a cyclic polydiorganosiloxane of formula:

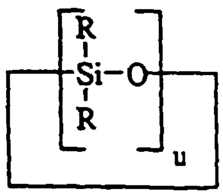

(VIII)

in which R has the meaning given hereinabove for the formula (I) and u is an integer or fractional number ranging from 3 to 10;

- and optionally a chain-terminating agent consisting of a compound of formula (V) where r = 0, s = 0, t = 0 - 50, $R^{14}$ is R and Y is R or Z.

**12.** Process for the preparation of the linear polyorganosiloxanes of formula (V) where s = 0, which can be used in the process for conditioning textile materials according to any one of Claims 4 to 10, characterized in that a mixture in suitable proportions of the following reactants is reacted, if necessary in the presence of a basic or acidic catalyst:

- a polydiorganosiloxane or a mixture of polydiorganosiloxanes of formula(e):

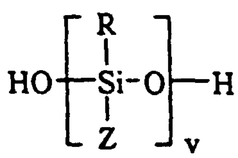

and/or

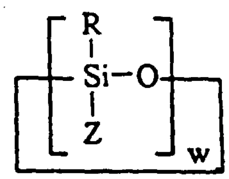

(IX) (X)

where the symbols R and Z have the meanings given hereinabove for the formula (I), v is an integer or fractional number ranging from 10 to 500 and w is an integer or fractional number ranging from 3 to 10;

- a polydiorganosiloxane corresponding to the formula (V) where r = 0, s = 0, t = 10 - 500 , $R^{14}$ is R and Y is OH, and/or a cyclic polydiorganosiloxane of formula (VIII);
- and optionally a chain-terminating agent consisting of a compound of formula (V) where r = 0, s = 0, t = 0 - 50, $R^{14}$ is R and Y is R or Z.